# EUROPÄISCHE PATENTSCHRIFT

(11) **EP 0 525 559 B1**
(45) Veröffentlichungstag und Bekanntmachung des Hinweises auf die Patenterteilung: **14.02.1996**
(21) Anmeldenummer: 92112317.0
(22) Anmeldetag: 18.07.1992
(51) Int. Cl.: H04N 7/087

(54) **Verfahren und Fernsehtextempfangsgerät zur Verringerung der Wartezeiten bei der Anzeige von Fernsehtextseiten**
Teletext reception method and device for reducing the waiting time during teletext pages display
Méthode et dispositif pour la réception de télétexte avec diminution des temps d'attente lors de l'affichage de pages de télétexte

(30) Priorität: 22.07.1991 DE 4124258
(43) Veröffentlichungstag der Anmeldung: 03.02.1993
(73) Patentinhaber: GRUNDIG E.M.V. Elektro-Mechanische Versuchsanstalt Max Grundig GmbH & Co. KG, D-90762 Fürth (DE)
(72) Erfinder: Hegendörfer, Max, GRUNDIG E.M.V., Max Grundig, W-8510 Fürth (DE)

(56) Entgegenhaltungen:
- EP-A- 0 037 077
- EP-A- 0 304 129
- DE-A- 3 047 597
- RUNDFUNKTECHNISCHE MITTEILUNGEN Bd. 31, Nr. 2, März 1987, NORDERSTEDT, DEUTSCHLAND Seiten 83 - 93, G.EITZ, K.-U. OBERLIES, H. KOCH 'Top- Ein Verfahren zur vereinfachten Anwahl von Fernsehtext-Tafeln durch den Zuschauer'

## Beschreibung

Die Erfindung betrifft ein Verfahren zur Verringerung der Wartezeiten bei der Anzeige von Fernsehtextseiten gemäß dem Oberbegriff des Anspruchs 1 und ferner ein Fernsehtextempfangsgerät mit den im Oberbegriff des Anspruchs 2 angegebenen Merkmalen.

Aus der DE-C2 30 12 429 ist bereits ein Verfahren zur Verringerung der Wartezeiten bei der Anzeige von Text- und Grafikseiten bekannt. Bei diesem bekannten Verfahren werden senderseitig zu wenigstens einem Teil der zu übertragenden Text- oder Grafikseiten nicht beim Empfänger dargestellte Zusatzinformationen mit Hinweisen auf weitere inhaltlich zugeordnete Seiten hinzugefügt. Empfangsseitig wird jeweils eine ausgewählte Seite auf einem Sichtgerät dargestellt und ferner diejenigen Seiten automatisch gespeichert, die in der Zusatzinformation der ausgewählten Seite bezeichnet sind. Diese automatisch gespeicherten Seiten können bei Bedarf verzögerungsfrei auf dem Sichtgerät angezeigt werden.

Der Nachteil dieses bekannten Verfahrens besteht darin, daß für die Übertragung der Zusatzinformationen, bei denen es sich um die Seitennummern inhaltlich zugeordneter Seiten handelt, vergleichweise viel Übertragungskapazität zur Verfügung gestellt werden muß. Dies ist insbesondere dann der Fall, wenn einer Seite eine größere Anzahl von inhaltlich zugehörigen Seiten zugeordnet werden soll. Ein weiterer Nachteil des bekannten Verfahrens besteht darin, daß das senderseitige Erstellen der Zusatzinformationen aufwendig und fehleranfällig ist. In diesem Zusammenhang ist auch von Bedeutung, daß sich die Anzahl der übertragenen Seiten zu einzelnen Themen und damit auch die senderseitig zu erstellenden Zusatzinformationen von Tag zu Tag erheblich ändern kann.

Weiterhin ist aus der DE-A1-30 47 597 ein Verfahren zum raschen und gezielten Auffinden von Informationsblöcken bei verteilenden Informationssystemen bekannt. Bei diesem bekannten Verfahren wird senderseitig jedem zu übertragenden Informationsblock ein fünfstelliges Kennzeichen vorangestellt, wobei jede Stelle des Kennzeichens ein definiertes Suchkriterium enthält. Empfangsseitig besteht dann die Möglichkeit, durch Vorgabe einer oder mehrerer Stellen des Kennzeichens den übertragenen Datenstrom auf das Vorliegen von Informationsblöcken, die die vorgegebenen Stellen des Kennzeichens enthalten, zu überprüfen und die ermittelten Informationsblöcke unter Verwendung eines Einseitenspeichers auf einem Bildschirm darzustellen.

Auch dieses bekannte Verfahren weist Nachteile auf. So ist das senderseitige Erstellen des fünfstelligen Kennzeichens aufwendig und fehleranfällig. Weiterhin muß im bekannten Fall der Benutzer das fünfstellige Kennzeichen kennen und ein Suchkriterium mittels der Bedientastatur des Empfangsgerätes eingeben. Auch die Eingabe dieses Suchkriteriums ist fehleranfällig.

Der Erfindung liegt die Aufgabe zugrunde, ein Verfahren anzugeben, bei dem die vorstehend beschriebenen Nachteile verringert sind.

Diese Aufgabe wird durch ein Verfahren mit den im Anspruch 1 angegebenen Merkmalen gelöst.

Der Anspruch 2 betrifft ein Fernsehtextempfangsgerät, wie es zur Realisierung des beanspruchten Verfahrens verwendet werden kann.

Die Vorteile der Erfindung bestehen insbesondere darin, daß die für die Übertragung der als Zusatzinformationen verwendeten Themenkennsignale notwendige Übertragungskapazität gering ist, da diese unabhängig ist von der Anzahl der inhaltlich zugeordneten Seiten. Weiterhin ist das senderseitige Erstellen der als Zusatzinformationen verwendeten Themenkennsignale einfach und vergleichsweise fehlerunanfällig.

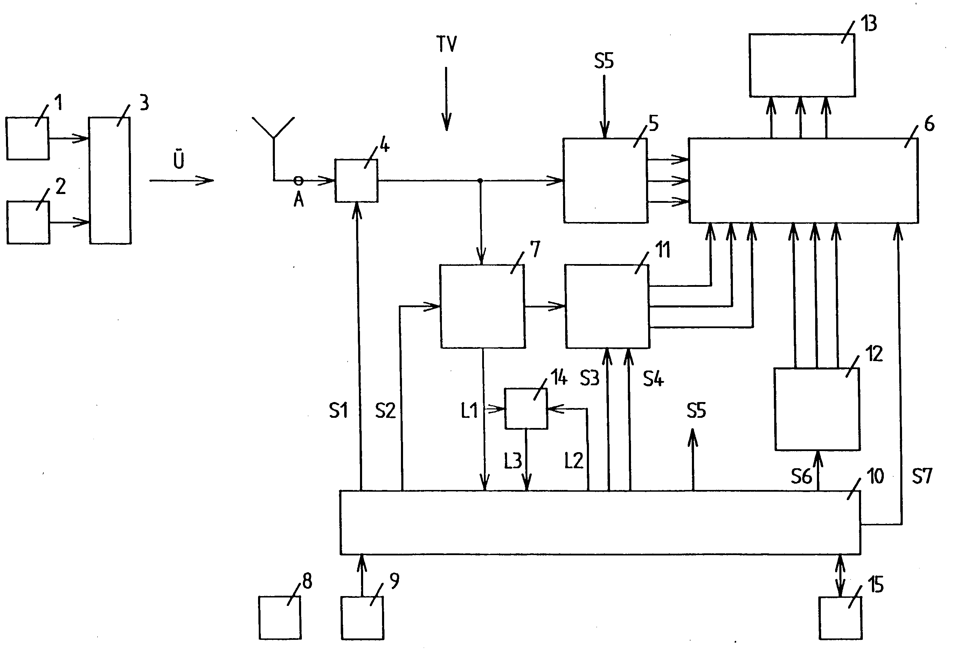

Im folgenden wird ein Ausführungsbeispiel für die Erfindung anhand der Figur näher erläutert.

Diese zeigt einen Sender, bestehend aus einer Videosignalquelle 1, einer Vorrichtung 2 zur Erzeugung von Signalen, die einzelnen Fernsehtextseiten entsprechen, und einer Einsetzschaltung 3, in welcher die Fernsehtextsignale in die vertikalen Austastlücken des Videosignals eingesetzt werden. In der Vorrichtung 2 wird in jede Fernsehtextseite eine Seitennummer und ein bei der Darstellung auf dem Bildschirm nicht sichtbares Themenkennsignal eingesetzt, beispielsweise ein Themenkennsignal für Sport, Nachrichten, Programmvorschau, Wetter, usw.

Das über die Übertragungsstrecke Ü übertragene Signal wird einem Fernsehempfänger TV über dessen Antenneneingang A zugeführt. Der gezeigte Fernsehempfänger weist weiterhin auf: ein aus einem Tuner und einem ZF-Verstärker bestehendes Empfangsteil 4, eine Signalverarbeitungsschaltung 5, eine Eintastschaltung 6, einen Fernsehtextdecoder 7, eine aus einem Fernbedienungsgeber 8 und einem Fernbedienungsempfänger 9 bestehende Bedieneinheit, einen Mikrocomputer 10, einen Fernsehtextmehrseitenspeicher 11, einen DOS-Baustein 12 (display-on-screen), einen Bildschirm 13, einen Vergleicher 14 und einen Themenkennsignalspeicher 15.

Der Mikrocomputer 10 dient zur Steuerung der Arbeitsweise der vorgenannten Schaltungen 4, 5, 6, 7, 11 und 12, was durch die Steuerleitungen S1, S2, ..., S7, angedeutet ist.

Das empfangene hochfrequente Videosignal wird dem über die Steuerleitung S1 gesteuerten Empfangsteil 4 zugeführt, an dessen Ausgang ein FBAS-Signal zur Verfügung steht. Dieses wird in der über die Steuerleitung S5 gesteuerten Signalverarbeitungsschaltung 5 in ein Komponentensignal, beispielsweise ein R,G,B-Signal, umgewandelt. Das am Ausgang der Signalverarbeitungsschaltung 5 erhaltene R,G,B-Signal wird der Eintastschaltung 6 zugeführt.

Ferner werden aus dem am Ausgang des Empfangsteils 4 zur Verfügung stehenden FBAS-Signal im Fernsehtextdecoder 7 die in den vertikalen Austastlücken des Videosignals übertragenen Fernsehtextsignale, die einer mittels der Bedieneinheit 8, 9 ausgewählten Fernsehtextseite entsprechen, abgetrennt und decodiert. Diese Abtrennung und Decodierung wird vom Steuersignal S2 gesteuert, welches dem Fernsehtextdecoder 7 vom Mikrocomputer 10 in Ansprache auf die genannte Seitenauswahl zugeführt wird.

Die der ausgewählten Fernsehtextseite entsprechenden Signale werden im Fernsehtextmehrseitenspeicher 11 abgespeichert. Zu dieser Abspeicherung werden dem Fernsehtextmehrseitenspeicher 11 über die Steuerleitung S3 im Mikrocomputer 10 erzeugte Schreibtaktsignale zugeführt. Ferner wird das in der ausgewählten Fernsehtextseite enthaltenen Themenkennsignal im Fernsehtextdecoder 7 aus dem Fernsehtextsignal abgetrennt und über die Leitung L1 dem Vergleicher 14 zugeführt und weiterhin über den Mikrocomputer 10 im Themenkennsignalspeicher 15 abgelegt.

Zum Auslesen der Signale aus dem Fernsehtextmehrseitenspeicher 11 erzeugt der Mikrocomputer 10 Lesetaktsignale, die dem Fernsehtextmehrseitenspeicher 11 über die Steuerleitung S4 zugeführt werden. Die aus dem Fernsehtextmehrseitenspeicher 11 ausgelesenen Signale werden der Eintastschaltung 6 in Form von R, G, B-Signalen zugeführt.

Durch geeignete Steuerung des Eintastvorganges durch den Mikrocomputer 10 über die Steuerleitung S7 können die Fernsehtextsignale entweder dem normalen Fernsehbild oder Signalen, die im über die Steuerleitung S6 gesteuerten DOS-Baustein 12 erzeugt werden, überlagert werden.

Die Ausgangssignale der Eintastschaltung 6 werden auf dem Bildschirm 13 des Fernsehempfängers TV dargestellt.

Wird nun seitens des Benutzers nach der Auswahl einer Fernsehtextseite bzw. während der Darstellung einer ausgewählten Fernsehtextseite auf dem Bildschirm 13 eine Speicherauslösetaste auf dem Fernbedienungsgeber 8 betätigt, dann erzeugt der Mikrocomputer 10 ein Steuersignal S2 derart, daß im Fernsehtextdecoder 7 die Themenkennsignale aller Fernsehtextseiten aus dem Fernsehtextsignal abgetrennt und im Vergleicher 14 mit dem im Speicher 15 abgelegten Themenkennsignal verglichen werden, welches dem Vergleicher 14 über den Mikrocomputer 10 und die Leitung L2 zugeführt wird.

Das Ergebnis jedes Vergleiches wird dem Mikrocomputer 10 über die Leitung L3 mitgeteilt. Ist der Vergleich positiv, dann initiiert der Mikrocomputer 10 über die Steuerleitung S3 die Abspeicherung der jeweiligen Fernsehtextseite im Mehrseitenspeicher 11.

Nach dieser Überprüfung der Themenkennsignale aller im Fernsehtextzyklus des momentan eingestellten Senders enthaltenen Fernsehtextseiten sind alle Fernsehtextseiten, deren Themenkennsignal mit dem zum Zeitpunkt der Betätigung der Speicherauslösetaste gültigen bzw. im Speicher 15 abgelegten Themenkennsignal übereinstimmt, im Fernsehtextmehrseitenspeicher 11 abgelegt und können verzögerungsfrei aus diesem abgerufen und auf dem Bildschirm 13 dargestellt werden.

Beispielsweise kann der Benutzer mittels der Zifferntastatur des Fernbedienungsgebers 8 eine Nachrichtenseite anwählen. Nach dieser Anwahl kann der Benutzer durch Betätigung der Speicherauslösetaste des Fernbedienungsgebers die Abspeicherung aller Nachrichtenseiten des momentan eingestellten Senders bewirken.

Bei einer zweiten Ausführungsform der Erfindung erfolgt die Abspeicherung aller weiteren Fernsehtextseiten, deren Themenkennsignal mit dem Themenkennsignal einer ausgewählten Fernsehtextseite übereinstimmt, nach der Auswahl einer Fernsehtextseite automatisch, d.h. ohne daß es der Betätigung einer Speicherauslösetaste bedarf.

Die Erfindung ist auch dann verwendbar, wenn die Speicherkapazität des Fernsehtextmehrseitenspeichers 11 nicht zur Abspeicherung aller Fernsehtextseiten, deren Themenkennsignal mit dem Themenkennsignal einer ausgewählten Fernsehtextseite übereinstimmt, ausreicht. In diesem Fall können beispielsweise die ausgewählte Seite und die 7 Seiten mit den nächstgrößeren Seitennummern und übereinstimmendem Themenkennsignal im Fernsehtextmehrseitenspeicher abgelegt werden.

Ferner ist die Erfindung auch dann einsetzbar, wenn nicht - wie gezeigt - ein Fernsehempfänger, sondern ein Videorecorder als Fernsehtextempfangsgerät verwendet wird.

## Patentansprüche

1. Verfahren zur Verringerung der Wartezeiten bei der Anzeige von Fernsehtextseiten mit folgenden Verfahrensschritten:
- Senderseitiges Erzeugen von Signalen, die numerierten Fernsehtextseiten entsprechen,
- senderseitiges Einfügen eines Themenkennsignals in jede der numerierten Fernsehtextseiten,
- Übertragen der Fernsehtextseiten auf die Empfangsseite,
- empfangsseitiges manuelles Auswählen einer der numerierten Fernsehtextseiten durch Eingabe der Seitennummer der Fernsehtextseite,
- Abspeichern weiterer Fernsehtextseiten, deren Themenkennsignal mit dem Themenkennsignal der durch Eingabe der Seitennummer ausgewählten Fernsehtextseite übereinstimmt, wobei hierfür das Themenkennsignal aus dem Fernsehtextsignal der ausgewählten Fernsehtextseite abgetrennt und gespeichert wird und die Speicherung der weiteren Fernsehtextseiten durchgeführt wird, wenn ein weiteres abgetrenntes Themenkennsignal mit dem gespeicherten Themenkennsignal übereinstimmt, und wobei dieses Abspeichern entweder automatisch nach dem manuellen Auswählen erfolgt oder erst nach weiterer manueller Betätigung einer Speicherauslösetaste bewirkt wird.

2. Fernsehtextempfangsgerät mit
- einer Bedieneinheit zur Auswahl einer numerierten Fernsehtextseite durch Eingabe der Seitennummer der Fernsehtextseite,
- einem Fernsehtextdecoder zur Decodierung der der ausgewählten Seite entsprechenden Fernsehtextsignale,
- einem Mehrseitenspeicher zur Abspeicherung der Fernsehtextsignale mehrerer Fernsehtextseiten,
- einer Schaltung zur Abtrennung eines Themenkennsignals aus der ausgewählten Fernsehtextseite,
- einem Speicher zur Speicherung des abgetrennten Themenkennsignals,
- einem Vergleicher, und
- einer Steuerschaltung,
- wobei im Vergleicher das abgetrennte, gespeicherte Themenkennsignal mit den Themenkennsignalen weiterer Fernsehtextseiten verglichen wird,
- wobei die Steuerschaltung (10) die Abspeicherung der Fernsehtextsignale derjenigen weiteren Fernsehtextseiten steuert, deren Themenkennsignal mit dem Themenkennsignal der durch Eingabe der Seitennummer ausgewählten Fernsehtextseite übereinstimmt, und wobei die Steuerschaltung das Abspeichern derart steuert, daß dieses Abspeichern entweder automatisch nach der Eingabe der Seitennummer erfolgt oder erst nach manueller Betätigung einer Speicherauslösetaste bewirkt wird.

## Claims

1. A process for reducing waiting times in the display of television text pages comprising the following process steps:
- transmitter-end generation of signals which correspond to numbered television text pages,
- transmitter-end insertion of a topic code signal into each of the numbered television text pages,
- transmission of the television text pages to the receiving end,
- receiving-end manual selection of one of the numbered television text pages by input of the page number of the television text page,
- storage of further television text pages, the topic code signal of which corresponds to the topic code signal of the television text page selected by the input of the page number, where for this purpose the topic code signal is separated from the television text signal of the selected television text page and is stored and the storage of the further television text pages is carried out when a further separated topic code signal corresponds to the stored topic code signal and where this storage either takes place automatically after the manual selection or is initiated only after further manual actuation of a memory function key.

2. A television text receiving device comprising
- a control unit for the selection of a numbered television text page by input of the page number of the television text page,
- a television text decoder for the decoding of the television text signals corresponding to the selected page,
- a multiple-page memory for the storage of the television text signals of a plurality of television text pages,
- a circuit for separating a topic code signal from the selected television text page,
- a memory for the storage of the separated topic code signal,
- a comparator and
- a control circuit
- where in the comparator the separated, stored topic code signal is compared with the topic code signals of further television text pages,
- and where the control circuit (10) controls the storage of the television text signals of those further television text pages whose topic code signal corresponds to the topic code signal of the television text page selected by input of the page number and where the control circuit controls the storage in such manner that this storage either takes place automatically following the input of the page number or is initiated only after the manual operation of a memory function key.

## Revendications

1. Procédé pour réduire les temps d'attente lors de l'affichage de pages de télétexte, présentant les étapes opératoires suivantes :
- production, côté émetteur, de signaux qui correspondent à des pages numérotées de télétexte,
- insertion, côté émetteur, d'un signal caractéristique de thème, dans chacune des pages numérotées de télétexte,
- transmission des pages de télétexte sur le côté réception,
- sélection manuelle, côté réception, de l'une des pages numérotées de télétexte par introduction du numéro de la page de télétexte,
- mémorisation d'autres pages de télétexte, dont le signal caractéristique de thème coïncide avec le signal caractéristique de thème de la page de télétexte, sélectionnée au moyen de l'insertion du numéro de page, auquel cas à cet effet le signal caractéristique de thème est séparé du signal de télétexte de la page sélectionnée de téletexte, et mémoire et la mémorisation des autres pages de télétexte est exécutée lorsqu'un autre signal caractéristique de thème séparé coïncide avec le signal caractéristique de thème mémorisé, et cette mémorisation est exécutée automatiquement après la sélection manuelle ou est déclenchée uniquement après un nouvel actionnement manuel d'une touche de déclenchement de la mémoire.

2. Appareil de réception de télétexte comportant :
- une unité de commande pour sélectionner une page numérotée de télétexte au moyen de l'introduction d'un numéro de la page de télétexte, et
- un décodeur de télétexte pour décoder les signaux de télétexte, qui correspondent à la page sélectionnée,
- une mémoire à plusieurs pages pour mémoriser les signaux de plusieurs pages de télétexte,
- un circuit pour séparer un signal caractéristique de thème, de la page sélectionnée de télétexte,
- une mémoire pour mémoriser le signal caractéristique de thème séparé,
- un comparateur, et
- un circuit de commande,
- auquel cas, dans le comparateur, le signal caractéristique de thème séparé et mémorisé est comparé aux signaux caractéristiques de thèmes d'autres pages de télétexte,
- le circuit de commande (10) commande la mémorisation des signaux de télétexte des autres pages de télétexte, dont le signal caractéristique de thème coïncide avec le signal caractéristique de thème de la page de télétexte, sélectionnée au moyen de l'introduction du numéro de page, et
- le circuit de commande commande la mémorisation de telle sorte que cette mémorisation s'effectue de façon automatique après l'introduction du numéro de page ou est déclenchée uniquement après l'actionnement manuel d'une touche de déclenchement de la mémoire.
